# EUROPEAN PATENT SPECIFICATION

(11) **EP 1 032 814 B1**
(45) Date of publication and mention of the grant of the patent: **27.09.2006**
(21) Application number: 98941582.3
(22) Date of filing: 20.08.1998
(51) Int. Cl.: G01N 15/02

(54) **PARTICLE DISPERSION DETERMINATION**
BESTIMMUNG VON TEILCHENDISPERSION
DETERMINATION DU DEGRE DE DISPERSION DE PARTICULES

(30) Priority: 21.08.1997 GB 9717658
(43) Date of publication of application: 06.09.2000
(73) Proprietor: TIOXIDE GROUP SERVICES LIMITED, London W14 0QL (GB)
(72) Inventor: HATFIELD, James, Henry, Husthwaite, York YO6 3SF (GB); HOWARD, Peter, Barry, Yarm, Cleveland TS15 9HT (GB); LAWSON, Edmund, John, Stockton-on-Tees, Cleveland TS18 5DD (GB); MACKENZIE, Alastair, Orr, Darlington, County Durham DL2 1RR (GB)
(74) Representative: Winkler, Andreas Fritz Ernst
(86) International application number: PCT/GB1998/002494
(87) International publication number: WO 1999/010725

(56) References cited:
- EP-A- 0 479 231
- WO-A-87/07024
- US-A- 3 043 183
- US-A- 5 249 029
- ANONYMOUS: "Dispersion Analysis. March 1982." IBM TECHNICAL DISCLOSURE BULLETIN, vol. 24, no. 10, March 1982, pages 5038-5040, XP002087335 New York, US
- ANONYMOUS: "Automatic Grindometer. September 1981." IBM TECHNICAL DISCLOSURE BULLETIN, vol. 24, no. 4, September 1981, pages 2147-2150, XP002087336 New York, US

## Description

This invention relates to a method and device for determining the degree of dispersion (otherwise commonly referred to as "fineness of grind") of particles in a particle - vehicle system such as liquid coatings and their intermediates and in particular the degree of dispersion of pigment in paint.

Clearly, to obtain optimum properties from a coating, it is desirable that the particles should be of optimum size. Thus in paints the size of pigment particles can affect both the opacity and the glossiness and it is necessary to mill the pigment as it is being dispersed into the vehicle to achieve the optimum size and in particular to break up any agglomerates of particles. However, excessive milling is commercially undesirable in terms of energy and time and, therefore, a test for the degree to which agglomerates have been broken down is desirable. Such a test is known as a "fineness of grind" test and it gives a measure of the number of oversize particles remaining in the system.

The standard test method as has been used for many years is set out in ASTMS D 1210. The basic component of the test is a steel gauge block having a smooth upper surface which contains a path or two parallel paths, each path tapering uniformly in depth lengthways from zero depth at one end to a specified depth, e.g. 50 or 100 µm, at the other end with intermediate calibrations in accordance with the depth at those points. The gauge may also be calibrated in terms of Hegman units, an arbitrary scale that will not be referred to further in this specification. In use, a sample of the system to be tested is placed at the deep end of a path so that it overflows slightly and is then drawn down the path towards the shallow end using a steel scraper blade of specified dimensions. The gauge is then placed between the operator and a light source and observation made of the point where a definite speckled pattern (as distinct from isolated specks) first appears. This point gives a measure of the fineness of grind. In addition the point at which "stragglers", ie odd particles as distinct from a definite speckled pattern, first appear can be assessed. The sample can then be given a specification based on these two readings.

However, this test has obvious drawbacks. Firstly, it is subjective as it depends on a personal assessment by the operator and hence significant differences can arise if the same paint is assessed by different operators. Secondly, the assessment has to be carried out before the film dries to any significant extent (within 10 seconds according to the standard) as the film thickness decreases during drying and operator assessment in such a short time span is difficult. Thirdly, once the test has been completed and the gauge cleaned, no record exits other than the assessment figure.

US 5249029 discloses a device for assessing the fineness of dispersion of particles in a liquid film, said device comprising a light source, a movable platform, a standard gauge block placed on said platform for mounting a liquid film of increasing thickness, and a photoreceiver comprising a dark-field lens adapted to eliminate light directly reflected at the film surface and to pick up only light scattered from particles in the film.

"Dispersion Analysis. March 1982." IBM TECHNICAL DISCLOSURE BULLETIN, vol. 24, no. 10, March 1982, pages 5038-5040, New York, US, discloses a device for assessing the fineness of dispersion of particles in a liquid film, said device comprising a light source, a standard gauge block for mounting a liquid film of increasing thickness, and a photographic camera, wherein none of the light source, the gauge block and the camera are movable and the photographic camera looks into the dark field from above and at a right angle to the gauge block surface, so as to receive only light reflected from discontinuities in the surface of the film.

According to the present invention, there is provided a device for assessing the fineness of dispersion of particles in a liquid vehicle, as defined in claim 1.

In order to avoid depth of focus problems, the line scan video camera is focussed on a narrow line and the film is moved relative to the camera at a rate dependent on the line scan rate of the camera so the image is built up line by line.

According to a preferred embodiment of the invention, a device for assessing the fineness of dispersion of particles in a liquid vehicle comprises a light source, a video line scan camera mounted at an acute angle to the horizontal so that the angle of view is below the angle of illumination, a horizontal platform lying between the light source and the camera and movable relative to the camera. means on said platform for accurately positioning a fineness of grind gauge and means for storing and/or displaying an image generated by the camera.

According to a further aspect of the invention, there is provided a method for assessing the fineness of dispersion of particles in a liquid vehicle, as defined in claim 3.

The invention will be more readily understood from the following description taken in conjunction with the accompanying drawings in which:
Figure 1 shows a gauge block of the type specified in the standard;
Figure 2 is a diagrammatic view of one embodiment of the device according to the invention;
Figure 3 shows the speckle pattern produced during a test of a paint by the device shown in Figure 2 and an analysis of the pattern in the form of a bar chart

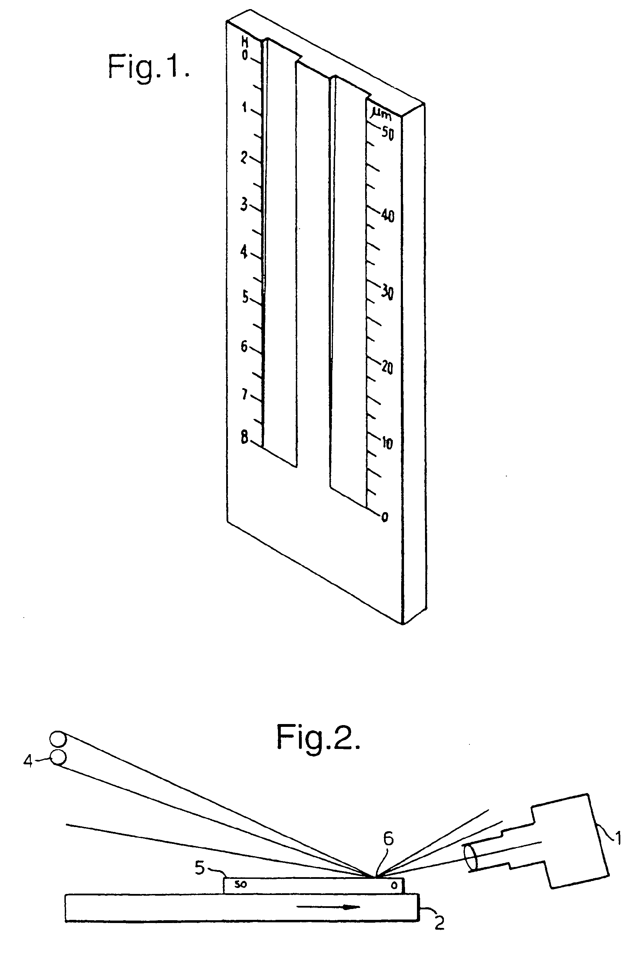

As shown in Figure 2, a line scan video camera 1 is mounted so as to be inclined at an angle of approximately 12º to the surface of a horizontal platform 2 which is driven by a synchronous electric motor (not shown) so as to be movable longitudinally relative to the camera. A light source 4 is mounted above the other end of the platform at a height such that the camera essentially looks into the 'dark field' below the light source. To minimise flicker an incandescent lamp or a biaxial fluorescent lamp driven at high frequency is used.

In use, a sample to be tested is drawn down into one of the channels of a standard gauge block as shown in Figure 1 having a maximum depth of 50 µm (available, for example, from Sheen Instruments Ltd of Kingston, England under the designation 501/50) and the block is immediately placed on the platform (which is provided with suitable means for accurately locating the block in position) with the deep end of the channel away from the camera. Activation of the drive motor causes the gauge block to move at a constant speed past a line 6 on which the camera is focussed over a period of circa 5 seconds so an image is built up line by line, any particle projecting through or distorting the surface of the sample film deflecting light into the camera. Scanning in this manner avoids depth of focus problems and allows the camera to be used with a wide aperture, maximising the amount of light collected . The reason for scanning the shallow end of the channel first is to reduce any effect due to the film drying, which will, of course commence at the shallow end.

The image may be electronically stored so it can be reproduced and, by using a suitably programmed computer may be analysed to provide speckle and straggler readings and an output in a different form, such as a bar chart.

The following example illustrates the invention.

### Example

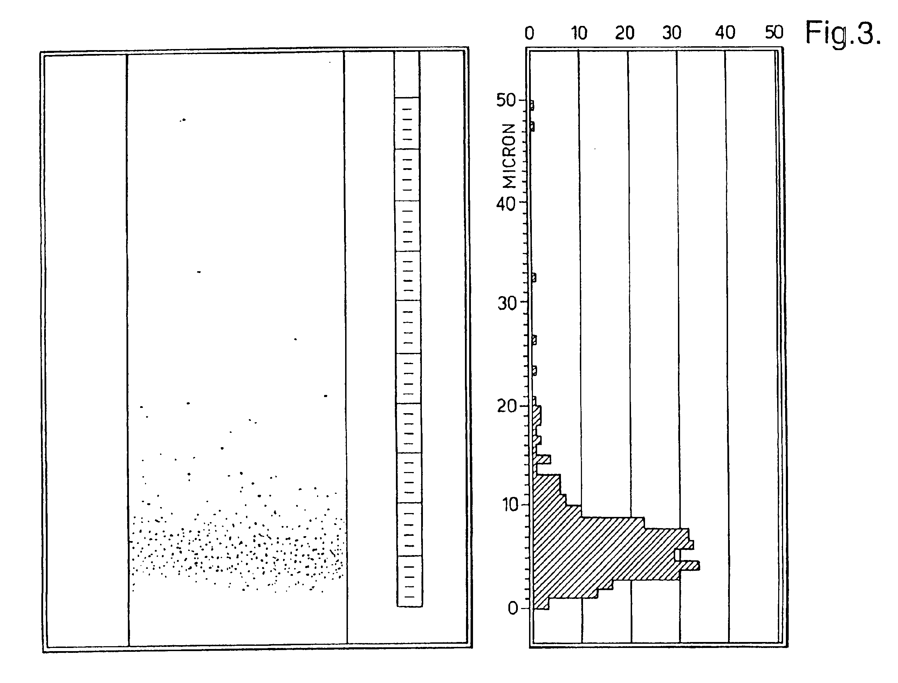

A paint sample consisting of titanium dioxide pigment in an alkyd resin vehicle was dripped on to a 50µm gauge block and drawn down to form a film of decreasing thickness as specified in ASTMS D 1210. The block was immediately placed in the device shown in Figure 2 and the film was scanned as previously described. The image produced is shown reversed in Figure 3 and computer analysis gave a fineness of grind reading of 10-21. Assessment of the sample by three different operators using the conventional method gave readings of 10-20, 9-20 and 11-22 respectively. Further computer analysis produced the bar chart shown in Figure 3 and as can be seen, this gives an indication of the number of particles protruding through the film at a particular point on the gauge, for example there are 7 particles protruding where the gauge has a depth of 10 to 11µm.

## Claims

1. A device for assessing the fineness of dispersion of particles in a liquid vehicle, comprising:
a light source (4),
a movable platform (2),
a standard gauge block (5) placed on the platform (2) for mounting a film of said vehicle of increasing thickness, and
a line scan video camera (1), wherein said light source (4), said standard gauge block (5) and said line scan video camera (1) are positioned relative to one another so that said line scan video camera (1) essentially looks into the dark field below the light source (4) and only receives light reflected from discontinuities in the surface of said film.

2. A device according to claim 1, further comprising means for storing and/or displaying an image generated by said line scan video camera (1).

3. A method assessing the fineness of dispersion of particles in a liquid vehicle, comprising drawing down a sample of the vehicle to form a film of increasing thickness, illuminating said film with a light source (4), generating an electronic image of said film by a line scan video camera (1) which only receives light from the dark field below the light source (4) and only receives light reflected from discontinuities in the surface of said film.

## Patentansprüche

1. Vorrichtung zur Ermittlung der Feinheit einer Dispersion von Teilchen in einem flüssigen Bindemittel, umfassend:
eine Lichtquelle (4),
einen beweglichen Tisch (2),
einen Standardmeßklotz (5), der auf dem Tisch (2) zum Errichten eines Films aus dem Bindemittel mit zunehmender Dicke plaziert ist, und
eine Zeilenabtastvideokamera (1), wobei die Lichtquelle (4), der Standardmeßklotz (5) und die Zeilenabtastvideokamera (1) relativ zueinander so positioniert sind, daß die Zeilenabtastvideokamera (1) im wesentlichen in das Dunkelfeld unter der Lichtquelle (4) sieht und nur Licht empfängt, das von Unstetigkeiten in der Oberfläche des Films reflektiert ist.

2. Vorrichtung nach Anspruch 1, **dadurch gekennzeichnet, daß** sie ein Mittel zur Speicherung und/oder Anzeige eines von der Zeilenabtastvideokamera (1) erzeugten Bildes umfaßt.

3. Verfahren zur Ermittlung der Feinheit von Teilchen in einem flüssigen Bindemittel, **dadurch gekennzeichnet, daß** es umfaßt:
Strecken einer Probe des Bindemittels zur Ausbildung eines Films mit zunehmender Dicke, Beleuchten des Films mit einer Lichtquelle (4) und Erzeugen eines elektronischen Bildes von dem Film durch eine Zeilenabtastvideokamera (1), die nur Licht von dem Dunkelfeld unter der Lichtquelle (4) empfängt und nur Licht empfängt, das von Unstetigkeiten in der Oberfläche des Films reflektiert ist.

## Revendications

1. Dispositif d'évaluation de la finesse de dispersion de particules dans un véhicule liquide, comprenant :
une source de lumière (4),
une plate-forme mobile (2),
une cale étalon normalisée (5) placée sur la plate-forme (2) pour la mise en place d'un film dudit véhicule d'épaisseur croissante, et
une caméra vidéo de balayage en ligne (1),
dans lequel ladite source de lumière (4), ladite cale étalon normalisée (5) et ladite caméra vidéo de balayage en ligne (1) sont positionnées l'une par rapport à l'autre de telle façon que ladite caméra vidéo de balayage en ligne (1) observe essentiellement le fond noir au-dessous de la source de lumière (4) et ne reçoive que la lumière réfléchie par les discontinuités de la surface dudit film.

2. Dispositif selon la revendication 1, comprenant en outre un moyen de mémorisation et/ou d'affichage d'une image générée par ladite caméra vidéo de balayage en ligne (1).

3. Procédé évaluant la finesse de dispersion de particules dans un véhicule liquide, comprenant l'étirage d'un échantillon du véhicule de manière à former un film d'épaisseur croissante, l'éclairage dudit film au moyen d'une source de lumière (4), la création d'une image électronique dudit film au moyen d'une caméra vidéo de balayage en ligne (1) qui ne reçoit que la lumière provenant du fond noir au-dessous de la source de lumière (4) et ne reçoit que la lumière réfléchie par les discontinuités de la surface dudit film.
